# EUROPEAN PATENT APPLICATION

(11) **EP 4 614 921 A1**
(43) Date of publication of application: **10.09.2025**
(21) Application number: 25158632.7
(22) Date of filing: 18.02.2025
(51) Int. Cl.: H04L 41/14, H04L 41/40, H04L 43/20, H04L 43/50

(54) **MULTI-THREADED SIMULATOR FOR PERFORMANCE BENCHMARKING IN SOFTWARE-DEFINED NETWORKS**

(30) Priority: 23.02.2024 US 202418585508
(71) Applicant: Nokia Solutions and Networks Oy, 02610 Espoo (FI)
(72) Inventor: Prabhu, Shailesh, 576104 Manipal (IN)
(74) Representative: Swindell & Pearson Limited

(57) **Abstract**

Performance of a node-under-test in a software-defined network (SDN) is benchmarked by implementing a simulator instance in another SDN node that transmits series of messages over multiple, parallel threads to the node-under-test. When the node-under-test is an SDN network management block (NMB), the other SDN node may be an SDN controller (SDNC), where each thread simulates a real-world connection between the NMB and a different real-world SDNC. When the node-under-test is an SDNC, the other SDN node may be an SDN network service gateway (NSG), where each thread simulates a real-world connection between the SDNC and a different real-world NSG. When the node-under-test is an NSG, the other SDN node may be user equipment, where each thread simulates a real-world connection between the NSG and different real-world user equipment. The disclosure enables lightweight, explicit performance benchmarking of SDN nodes without having to implement an entire SDN in the testing environment.

## Description

### BACKGROUND

### Field of the Disclosure

The present disclosure relates to software-defined networks (SDNs) and, more specifically, to performance benchmarking of nodes in SDN networks.

### Description of the Related Art

This section introduces aspects that may help facilitate a better understanding of the disclosure. Accordingly, the statements of this section are to be read in this light and are not to be understood as admissions about what is prior art or what is not prior art.

A conventional software-defined network (SDN) includes a network management block (NMB) connected to one or more SDN controllers (SDNCs), each of which is connected to one or more network service gateways (NSGs). The NMB handles the application-layer processing for the SDN, the SDNCs handle the control-layer processing for the SDN, and the NSGs handle the data-layer processing for the SDN.

In order to implement explicit performance benchmarking of an SDN node to be used in a real-world SDN, it is known to implement an entire SDN in a testing environment and then simulate real-world activity in the SDN to benchmark the performance of the node-under-test.

### SUMMARY

Implementing an entire SDN or even just the relevant portion of the SDN in order to benchmark explicit performance of an SDN node can be expensive. The present disclosure describes a lightweight technique for performance benchmarking of nodes in an SDN that avoids having to implement an entire SDN or even just the relevant portion of the SDN.

In at least one embodiment, the present disclosure is a method for benchmarking performance of a first SDN node. The method comprises (i) implementing a simulator instance on a second SDN node connected to the first SDN node; (ii) using the simulator instance to generate a plurality of parallel threads between the first and second SDN nodes, each parallel thread simulating a connection between the first SDN node and a different SDN node in a real-world SDN; and (iii) using the simulator instance to transmit a series of service messages over each thread from the second SDN node to the first SDN node.

### BRIEF DESCRIPTION OF THE DRAWINGS

Embodiments of the disclosure will become more fully apparent from the following detailed description, the appended claims, and the accompanying drawings in which like reference numerals identify similar or identical elements.
FIG. 1 is a block diagram of a testing environment according to one possible embodiment of the invention;
FIG. 2 is a block diagram representing the communications between the XMPP simulator instance in the network node of the testing environment of FIG. 1 and the node-under-test according to one possible implementation of performance benchmarking of the node-under-test;
FIG. 3 is a message flow diagram representing the messaging between the network node and the cloud-based XMPP simulator service of FIG. 1; and
FIG. 4 is a simplified hardware block diagram of an example node that can be used to implement any of the nodes of FIGs. 1-3.

### DETAILED DESCRIPTION

Detailed illustrative embodiments of the present disclosure are disclosed herein. However, specific structural and functional details disclosed herein are merely representative for purposes of describing example embodiments of the present disclosure. The present disclosure may be embodied in many alternate forms and should not be construed as limited to only the embodiments set forth herein. Further, the terminology used herein is for the purpose of describing particular embodiments only and is not intended to be limiting of example embodiments of the disclosure.

As used herein, the singular forms "a," "an," and "the," are intended to include the plural forms as well, unless the context clearly indicates otherwise. It further will be understood that the terms "comprises," "comprising," "contains," "containing," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functions/acts involved.

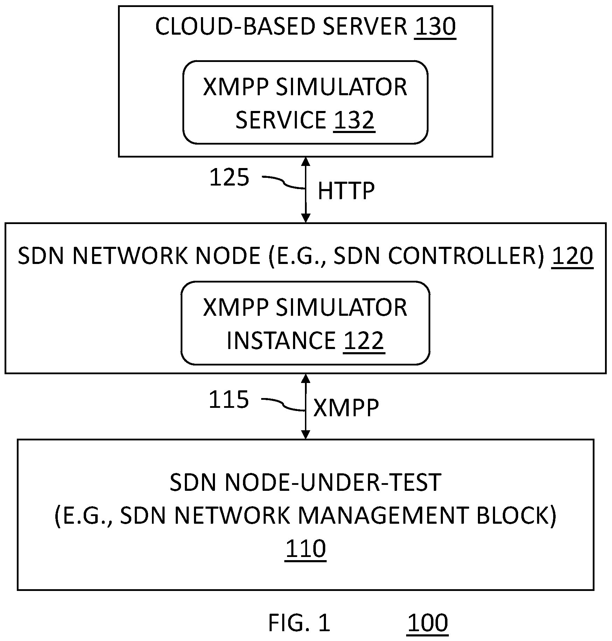

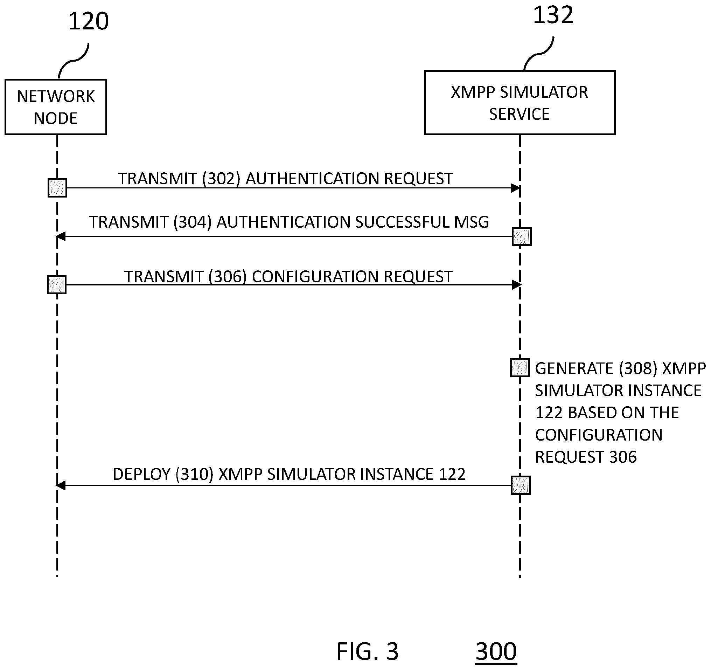

FIG. 1 is a block diagram of a testing environment 100 according to one possible embodiment of the invention in which a network management block (NMB) 110 for a software-defined network (SDN) (not shown) is the "node under test". In other embodiments of the disclosure, the node under test may be any suitable SDN node, such as (without limitation) an SDN controller (SDNC). As shown in FIG. 1, the testing environment 100 also includes a network node 120 and a cloud-based server 130. The cloud-based server 130 will be described further below in the context of FIG. 3.

The network node 120 may be any suitable SDN node that supports communication with the NMB 110, such as (without limitation) an SDN controller. Note that, in an embodiment in which the node-under-test 110 is an SDN controller, the network node 120 may be any suitable SDN node that supports communication with that SDNC, such as (without limitation) a network service gateway (NSG) or a network management block. Similarly, in an embodiment in which the node-under-test 110 is an NSG, the network node 120 may be any suitable SDN node that supports communication with that NSG, such as (without limitation) an SDNC or user equipment.

In the particular implementation of FIG. 1, communication between the network node 120 and the NMB 110 is via link 115 and conforms to the Extensible Messaging and Presence Protocol (XMPP). Those skilled in the art will understand that, in other implementations, communication between the network node 120 and the NMB 110 may conform to other suitable protocols, such as (without limitation) OpenFlow or JavaScript Object Notation - Remote Procedure Call (JSON-RPC). As shown in FIG. 1, the network node 120 implements an XMPP simulator instance 122 that controls communications with the NMB 110 via the XMPP link 115 in order to benchmark the performance of the NMB 110.

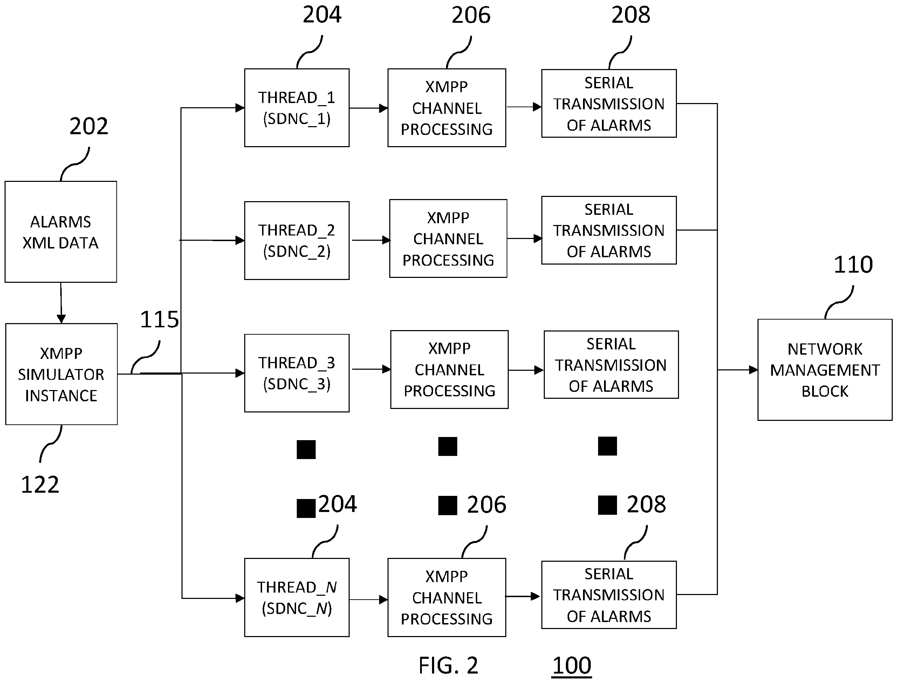

FIG. 2 is a block diagram representing the communications between the XMPP simulator instance 122 in the network node 120 of the testing environment 100 of FIG. 1 and the NMB 110 via the XMPP link 115 according to one possible implementation of performance benchmarking of the NMB 110. As shown in FIG. 2, the XMPP simulator instance 122 establishes N parallel threads 204 with the NMB 110 via the XMPP link 115, where, for example, each thread 204 simulates the real-world communications between the NMB 110 and a different SDN controller (not shown) in a real-world SDN.

In the particular implementation represented in FIG. 2, the performance benchmarking involves alarm messages containing Extensible Markup Language (XML) data. In particular, based on XML data stored in Alarms XML Data memory 202, the XMPP simulator instance 122 transmits, via XMPP channel processing 206, N serial streams 208 of alarm messages in parallel (and, typically, concurrently) to the NMB 110 via the XMPP link 115, one serial stream 208 per thread 204. Depending on the particular implementation, the N serial streams 208 may have the same or different sets of alarm messages, and the alarm messages themselves may be the same or different types of alarm messages, both within each serial stream and between the different serial streams. For example, different alarm messages may have different levels of criticality that influence the order in which the alarm messages are processed when received by the NMB 110, with alarm messages of higher criticality getting preference over alarm messages of lower criticality. In addition or instead, the ages of the alarm messages may also influence the order in which the alarm messages are processed by the NMB 110, with older alarm messages getting precedence over newer alarm messages.

As known in conventional performance benchmarking, the ability and/or inability of the NMB 110 to handle the incoming alarm messages is quantified to determine the ability and/or inability of the NMB 110 to handle similar loads of similar alarm messages when the NMB 110 is deployed in a real-world SDN.

Those skilled in the art will understand that the testing environment 100 of FIG. 1 can be used to perform performance benchmarking of the NMB 110 for SDN services other than handling alarm messages, such as (without limitation) handling other suitable kinds of control-channel messages, such as System Monitoring messages, Configuration (Gateway Configuration, Security Configuration, etc.) messages, Audit and Event messages.

As shown in FIG. 1, the testing environment 100 also includes the cloud-based server 130, which implements an XMPP simulator service 132. In some implementations of this embodiment, a company provides the cloud-based XMPP simulator service 132 to enable the company's customers to download specific XMPP simulator instances 122 that are configured for the customers' specific NMBs 110.

FIG. 3 is a message flow diagram representing the messaging 300 between the network node 120 and the cloud-based XMPP simulator service 132 of FIG. 1 via the Hypertext Transport Protocol (HTTP) link 125. Here, too, those skilled in the art will understand that, in other implementations, the communications between the network node 120 and the cloud-based XMPP simulator service 132 may conform to other suitable protocols, such as (without limitation) Hypertext Transfer Protocol Secure (HTTPS), Simple Network Management Protocol (SNMP), Google Remote Procedure Call (gRPC),

In the particular scenario represented in FIG. 3, the messaging 300 begins at step 302 with the network node 120 transmitting an authentication request to the XMPP simulator service 132. After successfully authenticating the network node 120, in step 304, the XMPP simulator service 132 transmits an acknowledgment message back to the network node 120 indicating that the authentication was successful.

In step 306, the network node 120 transmits a request to the XMPP simulator service 132 for a particularly configured XMPP simulator instance 122, where the request identifies the particular features of the performance benchmarking to be implemented for the customer's NMB 110, including (without limitation) the number *N* of threads 204, the overall transmission rate of the alarm messages, the transmission rate of the alarm messages in each thread 204, and the set of alarm messages to be transmitted serially in each thread 204. In response, in step 308, the XMPP simulator service 132 generates the corresponding specific XMPP simulator instance 122 based on the information in the configuration request and, in step 310, the XMPP simulator service 132 downloads and deploys the specific XMPP simulator instance 122 onto the network node 120. The network node 120 is then able to implement the performance benchmarking of the NMB 110 of FIG. 1 based on the alarm messaging of FIG. 2 that conforms to the specific requirements requested by the customer.

Note that steps 306-310 of FIG. 3 can be repeated if and when the XMPP simulator instance 122 needs to be modified to change the performance benchmarking of the node-under-test 110.

Although the embodiment shown in FIG. 1 involves the downloading of the XMPP simulator instance 122 onto the network node 120 from the cloud-based XMPP simulator service 132, those skilled in the art will understand that the cloud-based XMPP simulator service 132 is optional and that the XMPP simulator instance 122 can be deployed locally onto the network node 120.

Note that, in an implementation in which (i) the SDN node-under-test 110 is an SDN controller and (ii) the network node 120 is a network service gateway, each thread 204 in FIG. 2 simulates, for example, the real-world communications between the SDN controller and a different NSG in a real-world SDN. Similarly, in an implementation in which (i) the SDN node-under-test 110 is an NSG and (ii) the network node 120 is user equipment (UE), each thread 204 in FIG. 2 simulates, for example, the real-world communications between the NSG and a different UE in a real-world SDN. In general, the SDN node-under-test 110 can be any suitable node in an SDN environment, including (without limitation) NMBs, SDNCs, UEs, Underlay Border Gateways (UBRs), and Intermediate Gateways.

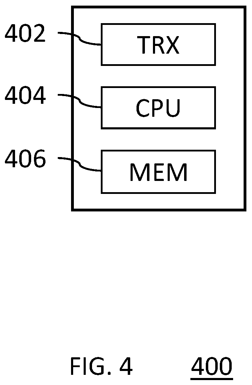

FIG. 4 is a simplified hardware block diagram of an example node 400 that can be used to implement any of the nodes 110, 120, or 130 of FIGs. 1-3. As shown in FIG. 4, the node 400 includes (i) communication hardware (e.g., wireless, wireline, and/or optical transceivers (TRX)) 402 that supports communications with other nodes, (ii) a processor (e.g., CPU microprocessor) 404 that controls the operations of the node 400, and (iii) a memory (e.g., RAM, ROM) 406 that stores code executed by the processor 404 and/or data generated and/or received by the node 400.

In certain embodiments, the present disclosure is a method for benchmarking performance of a first software-defined network (SDN) node. The method comprises (i) implementing a simulator instance on a second SDN node connected to the first SDN node; (ii) using the simulator instance to generate a plurality of parallel threads between the first and second SDN nodes, each parallel thread simulating a connection between the first SDN node and a different SDN node in a real-world SDN; and (iii) using the simulator instance to transmit a series of service messages over each thread from the second SDN node to the first SDN node.

In at least some of the above embodiments, the method further comprises characterizing processing of the service messages by the first SDN node to benchmark the performance of the first SDN node.

In at least some of the above embodiments, the first SDN node is an SDN network management block (NMB), and each thread simulates a connection between the SDN NMB and a different SDN controller in the real-world SDN.

In at least some of the above embodiments, the first SDN node is an SDN controller (SDNC), and each thread simulates a connection between the SDNC and a different network service gateway in the real-world SDN.

In at least some of the above embodiments, the first SDN node is a network service gateway (NSG), and each thread simulates a connection between the NSG and different user equipment in the real-world SDN.

In at least some of the above embodiments, each service message is an alarm message.

In at least some of the above embodiments, the method further comprises specifying a transmission rate of the service messages in each thread.

In at least some of the above embodiments, the method further comprises specifying a sequence of the service messages of varying criticality for one or more of the threads.

In at least some of the above embodiments, the method further comprises implementing the simulator instance on the second SDN node comprises downloading the simulator instance from a cloud-based simulator service.

In at least some of the above embodiments, the method further comprises transmitting a configuration request to the cloud-based simulator service specifying requested features of the simulator instance.

In at least some of the above embodiments, the requested features comprise one or more of a number of parallel threads, an overall transmission rate of the service messages, a transmission rate of the service messages on each thread, and properties of the service messages.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence. Likewise, additional steps may be included in such methods, and certain steps may be omitted or combined, in methods consistent with various embodiments of the disclosure.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure. For example, a relatively thin layer of adhesive or other suitable binder can be used to implement such "direct attachment" of the two corresponding components in such physical structure.

As used herein in reference to an element and a standard, the terms "compatible" and "conform" mean that the element communicates with other elements in a manner wholly or partially specified by the standard, and would be recognized by other elements as sufficiently capable of communicating with the other elements in the manner specified by the standard. A compatible or conforming element does not need to operate internally in a manner specified by the standard.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The functions of the various elements shown in the figures, including any functional blocks labeled as "processors" and/or "controllers," may be provided through the use of dedicated hardware as well as hardware capable of executing software in association with appropriate software. Upon being provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

As will be appreciated by one of ordinary skill in the art, the present disclosure may be embodied as an apparatus (including, for example, a system, a network, a machine, a device, a computer program product, and/or the like), as a method (including, for example, a business process, a computer-implemented process, and/or the like), or as any combination of the foregoing. Accordingly, embodiments of the present disclosure may take the form of an entirely software-based embodiment (including firmware, resident software, micro-code, and the like), an entirely hardware embodiment, or an embodiment combining software and hardware aspects that may generally be referred to herein as a "system" or "network".

Embodiments of the disclosure can be manifest in the form of methods and apparatuses for practicing those methods. Embodiments of the disclosure can also be manifest in the form of program code embodied in tangible media, such as magnetic recording media, optical recording media, solid state memory, floppy diskettes, CD-ROMs, hard drives, or any other non-transitory machine-readable storage medium, wherein, upon the program code being loaded into and executed by a machine, such as a computer, the machine becomes an apparatus for practicing the disclosure. Embodiments of the disclosure can also be manifest in the form of program code, for example, stored in a non-transitory machine-readable storage medium including being loaded into and/or executed by a machine, wherein, upon the program code being loaded into and executed by a machine, such as a computer, the machine becomes an apparatus for practicing the disclosure. Upon being implemented on a general-purpose processor, the program code segments combine with the processor to provide a unique device that operates analogously to specific logic circuits. The term "non-transitory," as used herein, is a limitation of the medium itself (i.e., tangible, not a signal) as opposed to a limitation on data storage persistency (e.g., RAM vs. ROM).

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. For example, the phrases "at least one of A and B" and "at least one of A or B" are both to be interpreted to have the same meaning, encompassing the following three possibilities: 1- only A; 2- only B; 3- both A and B.

All documents mentioned herein are hereby incorporated by reference in their entirety or alternatively to provide the disclosure for which they were specifically relied upon.

The embodiments covered by the claims in this application are limited to embodiments that (1) are enabled by this specification and (2) correspond to statutory subject matter. Non-enabled embodiments and embodiments that correspond to non-statutory subject matter are explicitly disclaimed even if they fall within the scope of the claims.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

While preferred embodiments of the disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosure described herein may be employed in practicing the technology of the disclosure. It is intended that the following claims define the scope of the invention and that methods and structures within the scope of these claims and their equivalents be covered thereby.

## Claims

1. A method for benchmarking performance of a first software-defined network SDN node (110), **CHARACTERISED BY** the method comprising:
implementing a simulator instance (122) on a second SDN node (120) connected to the first SDN node (110);
using the simulator instance (122) to generate a plurality of parallel threads (204) between the first and second SDN nodes (110 and 120), each parallel thread (204) simulating a connection between the first SDN node (110) and a different SDN node in a real-world SDN; and
using the simulator instance (122) to transmit a series of service messages (208) over each thread from the second SDN node (120) to the first SDN node (110).

2. The method of claim 1, further comprising characterizing processing of the service messages by the first SDN node (110) to benchmark the performance of the first SDN node (110).

3. The method of any of claims 1-2, wherein:
the first SDN node (110) is one of an SDN network management block NMB, an SDN controller SDNC, or a network service gateway NSG; and
each thread (204) simulates a connection between the first SDN node (110) and a different SDN node in the real-world SDN.

4. The method of any of claims 1-3, wherein each service message (208) is an alarm message.

5. The method of any of claims 1-4, further comprising specifying (306) at least one of (i) a transmission rate of the service messages in each thread and (ii) a sequence of the service messages of varying criticality for one or more of the threads.

6. The method of any of claims 1-5, further comprising implementing the simulator instance (122) on the second SDN node (120) wherein the implementing comprises downloading (310) the simulator instance (122) from a cloud-based simulator service (132).

7. The method of claim 6, further comprising transmitting (306) a configuration request to the cloud-based simulator service (132) specifying requested features of the simulator instance (122).

8. The method of claim 7, wherein the requested features (306) comprise one or more of a number of parallel threads, an overall transmission rate of the service messages, a transmission rate of the service messages on each thread, and properties of the service messages.

9. A second SDN node (120) for benchmarking performance of a first SDN node (110), the second SDN node (120) comprising:
at least one processor (404); and
at least one memory (406) storing instructions that, upon being executed by the at least one processor (404), cause the second SDN node (120) at least to BE **CHARACTERISED BY**:
implementing a simulator instance (122) on the second SDN node (120) connected to the first SDN node (110);
using the simulator instance (122) to generate a plurality of parallel threads (204) between the first and second SDN nodes (110 and 120), each parallel thread (204) simulating a connection between the first SDN node (110) and a different SDN node in a real-world SDN; and
using the simulator instance (122) to transmit a series of service messages (208) over each thread (204) from the second SDN node (120) to the first SDN node (110).

10. The second SDN node (120) of claim 9, wherein:
the first SDN node (110) is one of an SDN NMB, an SDNC, or an NSG; and
each thread (204) simulates a connection between the first SDN node (110) and a different SDN node in the real-world SDN.

11. The second SDN node (120) of any of claims 9-10, wherein each service message (208) is an alarm message.

12. The second SDN node (120) of any of claims 9-11, wherein the second SDN node (120) is adapted to specify at least one of (i) a transmission rate of the service messages in each thread and (ii) a sequence of the service messages of varying criticality for one or more of the threads.

13. The second SDN node (120) of any of claims 9-12, wherein the second SDN node (120) is adapted to download the simulator instance (122) from a cloud-based simulator service (132).

14. The second SDN node (120) of claim 13, wherein the second SDN node (120) is adapted to transmit (306) a configuration request to the cloud-based simulator service (132) specifying requested features of the simulator instance (122).

15. The second SDN node (120) of claim 14, wherein the requested features (306) comprise one or more of a number of parallel threads, an overall transmission rate of the service messages, a transmission rate of the service messages on each thread, and properties of the service messages.
